(19) Europäisches Patentamt
European Patent Office
Office européen des brevets

(11) **EP 2 218 738 A1**

(12) **EUROPÄISCHE PATENTANMELDUNG**

(43) Veröffentlichungstag:
**18.08.2010 Patentblatt 2010/33**

(51) Int Cl.:
*C08F 265/06* (2006.01)          *C09D 15/00* (2006.01)
*C09D 151/00* (2006.01)

(21) Anmeldenummer: **09000845.9**

(22) Anmeldetag: **22.01.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(71) Anmelder: **Bayer MaterialScience AG**
**51368 Leverkusen (DE)**

(72) Erfinder: **Die Erfindernennung liegt noch nicht vor**

(54) **Wässrige Polymerdispersion**

(57)    Die vorliegende Erfindung betrifft wässrige Polymerdispersionen mit Kern-Schale-Struktur, ein Verfahren zu deren Herstellung und deren Verwendung als Beschichtungsmittel.

EP 2 218 738 A1

**Beschreibung**

Die vorliegende Erfindung betrifft wässrige Polymerdispersionen mit Kern-Schale-Struktur, ein Verfahren zu deren Herstellung und deren Verwendung als Beschichtungsmittel.

Mehrphasige, wässrige Polyacrylatbindemittel sind schon seit längerem bekannt. Dabei ist es häufig so, dass die jeweiligen Phasen unterschiedliche Glasübergangstemperaturen ($T_g$) aufweisen. Häufig werden die Produkte in einer zweistufigen Polymerisation hergestellt, indem bei einer radikalischen Emulsionspolymerisation zwei unterschiedliche Monomermischungen nacheinander polymerisiert werden, wobei sich die Phasen, durch die Mechanistik der Emulsionspolymerisation bedingt, innerhalb der gleichen Dispersionsteilchen bilden.

Die Verfilmung der Polyacrylatbeschichtungsmittel erfolgt je nach Substrat und Glastemperatur bei erhöhter Temperatur oder bei Raumtemperatur mit Hilfe eines Colösemittels, das als interner Weichmacher wirksam ist.

Damit die Beschichtungen eine möglichst hohe Lösmittelbeständigkeit aufweisen sind hohe Glastemperaturen des Polymers generell von Vorteil, da die Diffusionsgeschwindigkeit von Lösmitteln unterhalb der Glastemperatur der Beschichtung stark erniedrigt ist.

Die mehrphasige Struktur mit unterschiedlichen Glastemperaturen bietet den Vorteil einer vergleichsweise niedrigen Mindestfilmbildetemperatur (MFT) und damit verbunden niedrigerem Gehalt an Colösemittel zur Verfilmung, wobei die Lösemittelbeständigkeit aufgrund der Phase mit hoher Glastemperatur vergleichsweise hoch ist.

Die Verwendung von Bindemitteln mit möglichst niedriger Hydrophilie ergibt Vorteile hinsichtlich der Beständigkeit der Beschichtungen gegenüber polaren Lösemitteln wie Wasser oder Alkohole. Die Hydrophilie des Beschichtungsmittels ergibt sich aus der Zusammensetzung des Polymers, wobei Monomere wie das Styrol als hydrophob anzusehen sind und potentiell ionische Monomere wie Acrylsäure gelten als stark hydrophil.

In der Emulsionspolymerisation werden externe Emulgatoren zugesetzt, um das freie Monomer während der Polymerisation zu emulgieren, die wachsenden Partikel zu stabilisieren und durch Mizellbildung zu Beginn des Prozesses kommt es zur Ausbildung der Polymerisationszentren. Allerdings kommt es nach der Applikation des Bindemittels und anschließender Verfilmung zur Migration des Emulgators an die Oberfläche der Beschichtung, was häufig mit anwendungstechnischen Nachteilen verbunden ist.

In der EP-A 0 376 096 werden Beschichtungsmittel beschrieben, die eine Glastemperatur des Kerns von größer 60 °C und eine Schale mit einer Glastemperatur von größer 80 °C aufweisen. Die Dispersionen enthalten weniger als 20,2 Gew.-% Monovinylarylverbindungen und mehr als 4,5 Gew.-% Methacrylsäure. Die Menge an zugesetztem Emulgator bezogen auf den Festkörper liegt immer > 2 Gew.-%.

Die WO-A 01/72897 beschreibt wässrige, mehrphasige Beschichtungsmittel, die aus einem weichen Kern mit einer Glastemperatur < 20 °C und einer harten Schale mit einer Glasübergangstemperatur von > 60 °C bestehen. Die Dispersionen bilden einen geschlossenen Film bei Raumtemperatur und enthalten kein Styrol.

In der DE-A 19,727,504 werden wässrige Polymerdispersionen offenbart, deren Glastemperatur des Kerns kleiner oder gleich der Glastemperatur der Schale ist, wobei der Säuregehalt der Schale > 5 Gew.-% ist.

Die EP-A 1 520 865 beschreibt Kern-Schale Partikel, wobei die Schale eine Glastemperatur von > - 9 °C aufweist und die Differenz zur Glastemperatur des Kerns mindestens 20 °C beträgt. Der Emulgatorgehalt der Beispiele liegt bei 3,0 Gew.-%.

Aufgabe der vorliegenden Erfindung ist die Bereitstellung von feinteiligen, wässrigen Polyacrylatdispersionen, die eine hohe Lösemittelbeständigkeit, insbesondere Ethanol- sowie Senfbeständigkeit, bei niedrigem Gehalt an Koaleszenshilfsmittel aufweisen. Darüber hinaus sollten die daraus hergestellten Beschichtungen eine gute Filmoptik sowie keine Oberflächendefekte oder Verlaufstörungen zeigen.

Es wurde nun gefunden, dass wässrige Polyacrylat-Dispersionen, die über eine Kem-Schale-Struktur mit einem definierten Gewichtsverhältnis von Kern und Schale verfügen, wobei Kern und Schale über definierte Glasübergangstemperaturen-Bereiche verfügen und die Dispersionen nur geringe Mengen an Emulgator enthalten, die oben definierte Aufgabe lösen.

Gegenstand der vorliegenden Anmeldung sind somit wässrige Polymerdispersionen enthaltend mindestens ein Kern-Copolymerisat A) und mindestens ein Schale-Copolymerisat B), **dadurch gekennzeichnet, dass** die Glasübergangstemperatur ($T_g$) des Kerns zwischen 70 °C und 100 °C, die Glasübergangstemperatur ($T_g$) der Schale zwischen 20 °C und 55 °C und die Gesamt-Glastemperatur ($T_g$) des Kern-Schale Copolymerisats zwischen 30°C und 80°C liegt und die Dispersion einen Emulgatorgehalt in einer Menge von ≤ 1,5 Gew.-%, bezogen auf den Feststoff, enthält.

Der in dieser Erfindung verwendete Begriff Glastemperatur bedeutet die Temperatur, bei der das Polymer von einem glasartigen Zustand in einen Zustand höherer Segmentbeweglichkeit der Polymerkette übergeht. Die Glastemperatur von statistischen Copolymeren kann nach der Fox-Gleichung (Bulletin of the American Physical Society 1, 3, Seite 123, 1956) berechnet werden:

$$\frac{1}{T_g} = \frac{w_1}{T_{g(1)}} + \frac{w_2}{T_{g(2)}} + ... \frac{w_i}{T_{g(i)}} + ... \frac{w_n}{T_{g(n)}}$$

Wobei $T_{g(i)}$ die Glastemperatur des jeweiligen Homopolymeren i von n Monomeren und $w_i$ den Massenanteil des Monomeren i bedeutet, wobei die Summe aller Massenanteile $w_1 + w_2 + ...w_i +... w_n = 1$ ist.

Soweit nicht anders gekennzeichnet, beziehen sich alle in der vorliegenden Erfindung dargestellten Glastemperaturen auf die nach der Fox-Gleichung berechneten Glastemperaturen.

Die experimentelle Glasübergangstemperatur ($T_g$) von Polymeren kann in bekannter Weise z.B. mittels Differential Scanning Calorimetry (DSC) ermittelt werden.

Die in den erfindungsgemäßen Dispersionen enthaltenen Polymer-Partikel weisen eine mittlere Teilchengröße von 75 bis 140 nm, bevorzugt 80 bis 125 nm, besonders bevorzugt 90 bis 110 nm auf.

Die erfindungsgemäß eingesetzten Copolymerisate A) und B) können als physikalische Mischungen vorliegen oder bevorzugt als Mehrstufenpolymerisate. Dabei wird die Mehrstufenpolymerisation mit der Herstellung des Kern-Copolymerisats A) begonnen, gefolgt von der Herstellung des Schalen-Copolymerisats B).

Der Begriff "Kern-Schale-Teilchen" ist aus dem Stand der Technik bestens bekannt und bezeichnet im Rahmen der vorliegenden Erfindung Polymerisate, welche durch mehrstufige Emulsionspolymerisation erhältlich sind. Dieses Verfahren ist aus dem Stand der Technik bereits seit langem bekannt und wird beispielsweise in Houben-Weyl, Band E20, Teil 2 (1987), S. 1150 ff. ausgeführt und erläutert. Weitere wertvolle Hinweise kann der Fachmann auch den Druckschriften US-A 3 793 402, DE-A 41 21 652, DE-A 41 36 993, EP-A 828 772 entnehmen, auf deren Offenbarung hiermit explizit Bezug genommen wird.

Das Monomergemisch des Copolymerisats A) (Kern) hat eine nach der Fox-Gleichung berechnete Glasübergangstemperatur ($T_g$) von 70 - 100 °C, bevorzugt von 80 - 100 °C, besonders bevorzugt von 85 - 95 °C.

Die nach Fox berechnete $T_g$ des Monomergemisches des Copolymerisats B) (Schale) beträgt 20 - 55 °C, bevorzugt 25 - 45 °C, besonders bevorzugt 25 - 35 °C.

Die $T_g$ des Copolymerisats B) ist mindestens 30 °C tiefer, bevorzugt mindestens 50 °C tiefer als die $T_g$ des Copolymerisats A).

Der berechnete Gesamt-Tg des Polymerisats ergibt rechnerisch nach Flory Fox wobei der Tg der erfmdungsgemäßen Polymerisate bevorzugt 30 bis 80 °C, bevorzugt 35 bis 70°C und besonders bevorzugt 40 bis 65°C beträgt.

Das Copolymerisat A) enthält als Aufbaukomponenten

a) $C_1$-$C_{20}$-Alkyl(meth)acrylate,

b) Vinylaromaten mit bis zu 20 C-Atomen,

c) Säurefunktionelle Monomere sowie

d) gegebenenfalls hydroxyfunktionelle Monomere.

Das Monomergemisch des Copolymerisats A) ist bevorzugt aus den Komponenten a), b), c) und gegebenenfalls d) so zusammengesetzt, dass die resultierende nach der Fox-Gleichung berechnete Glasübergangstemperatur ($T_g$) von 70 bis 100 °C, bevorzugt von 80 bis 100 °C, besonders bevorzugt von 85 bis 95 °C ergibt.

Das Monomergemisch des Copolymerisats B) ist bevorzugt aus den Komponenten a), b), c) und gegebenenfalls d) so zusammengesetzt, dass die resultierende nach der Fox-Gleichung berechnete Glasübergangstemperatur ($T_g$) von 20 bis 55 °C, bevorzugt von 25 bis 45°C, besonders bevorzugt von 25 bis 35 °C ergibt.

Dabei bezeichnen im Rahmen der vorliegenden Erfindungen die Schreibweise "(Meth)acrylate" Acrylate, Methacrylate sowie Mischungen aus beiden. Geeignete Ester der Methacrylsäure umfassen insbesondere Methylmethacrylat, Ethylmethacrylat, Propylmethacrylat, Isopropylmethacrylat, n-Butylmethacrylat, sec-Butylmethacrylat, tert-Butylmethacrylat, Pentylmethacrylat, Hexylmethacrylat, Heptylmethacrylat, Octylmethacrylat, 2-Octylmethacrylat, Ethylhexylmethacrylat, Nonylmethacrylat, 2-Methyloctylmethacrylat, 2-tert.-Butylheptylmethacrylat, 3-iso-Propylheptylmethacrylat, Decylmethacrylat, Undecylmethacrylat, 5-Methylundecylmethacrylat, Dodecylmethacrylat, 2-Methyldodecylmethacrylat, Tridecylmethacrylat, 5-Methyltridecylmethacrylat, Tetradecylmethacrylat, Pentadecylmethacrylat, Hexadecylmethacrylat, 2-Methylhexadecylmethacrylat, Heptadecylmethacrylat, 5-iso-Propylheptadecylme-thacrylat, 5-Ethyloctadecylmethacrylat, Octadecylmethacrylat, Nonadecylmethacrylat, Eicosylmethacrylat, Cycloalkylmethacrylate, wie beispielsweise Cyclopentylmethacrylat, Cyclohexylmethacrylat, 3-Vinyl-2-butylcyclohexylmethacrylat, Cycloheptylmethacrylat, Cyclooctylmethacrylat, Bornylmethacrylat, Tetrahydrofurfurylmethacrylat und Isobornylmethacrylat. Weiterhin können die Methacrylsäurederivate auch in Form der korrespondierenden Nitrile oder Amide eingesetzt werden, wie z.B. Methacrylnitril oder Methacrylamid. Außerdem besteht die Möglichkeit andere funktionelle Monomere in Abhängigkeit von der gewünschten Anwendung zu verwenden, wie beispielsweise Diacetonmethacrylamid oder Acetoacetoxyethylmethacrylat. Bevorzugt sind Methylmethacrylat, Ethylmethacrylat, Butylmethacrylat, tert-Butylmethacrylat, Methacrylamid oder Methacrylnitril, besonders bevorzugt sind Methylmethacrylat, tert-Butylmethacrylat oder Butylmethacrylat.

Geeignete Ester der Acrylsäure umfassen insbesondere Methylacrylat, Ethylacrylat, Propylacrylat, Isopropylacrylat, n-Butyl-acrylat, sec-Butylacrylat, tert-Butylacrylat, Pentylacrylat, Hexylacrylat, Heptylacrylat, Octylacrylat, 2-Octylacrylat, Ethylhexylacrylat, Nonylacrylat, 2-Methyl-octylacrylat, 2-tert.-Butylheptylacrylat, 3-iso-Propylheptyl-acrylat, Decylacrylat, Undecylacrylat, 5-Methylundecylacrylat, Dodecylacrylat, 2-Methyldodecylacrylat, Tridecylacrylat, 5-Methyltridecylacrylat, Tetradecylacrylat, Pentadecylacrylat, Hexadecylacrylat, 2-Methylhexade-cylacrylat, Heptadecylacrylat, 5-iso-Propylheptadecylacrylat, 5-Ethyloctadecylacrylat, Octadecylacrylat, Nona-decylacrylat, Eicosylacrylat, Cycloalkylacrylate, wie beispielsweise Cyclopentylacrylat, Cyclohexylacrylat, 3-Vi-nyl-2-butylcyclohexylacrylat, Cycloheptylacrylat, Cyclooctylacrylat, Bornylacrylat, Tetrahydrofurfurylacrylat und Isobornylacrylat. Weiterhin können die Acrylsäurederivate auch in Form der korrespondierenden Nitrile oder Amide eingesetzt werden, wie z.B. Acrylnitril oder Acrylamid. Außerdem besteht die Möglichkeit andere funktionelle Monomere in Abhängigkeit von der gewünschten Anwendung zu verwenden, wie z.B. Diacetonacrylamid oder Acetoacetoxyethylacrylat. Bevorzugt sind Ethylacrylat, n-Butylacrylat, Ethylhexylacrylat, Cyclohexylacrylat, Acrylamid oder Acrylnitril, besonders bevorzugt sind Ethylacrylat, n-Butylacrylat oder Ethylhexylacrylat.

Geeignete Vinylaromaten b) mit bis zu 20 C-Atomen sind beispielsweise Styrol, Vinyltoluol, o- und p-Methylstyrol, α-Butylstyrol, 4-n-Butylstyrol, 4-n-Decylstyrol, halogenierte Styrole, wie beispielsweise Monochlorstyrole, Dichlorstyrole, Tribromstyrole oder Tetrabromstyrole. Bevorzugt ist Styrol.

Geeignete olefinisch ungesättigte, säurefunktionelle Monomere c) sind sulfon-, phosphat- oder carbonsäurefunktionelle Monomere, bevorzugt sind carbonsäurefunktionelle Monomere wie Acrylsäure, Methacrylsäure, β-Carboxyethylacrylat, Crotonsäure, Fumarsäure, Maleinsäureanhydrid, Itaconsäure oder Monoalkylester zweibasiger Säuren bzw. Anhydride wie z.B. Maleinsäure-monoalkylester. Besonders bevorzugt sind Acryl- oder Methacrylsäure, ganz besonders bevorzugt ist Acrylsäure.

Ferner geeignet als Verbindungen der Komponente c) sind auch ungesättigte, radikalisch polymerisierbare Verbindungen mit Phosphat- bzw. Phosphonat- oder Sulfonsäure- bzw. Sulfonatgruppen, wie z.B. in der WO-A 00/39181 (S. 8, Z. 13 - S. 9, Z. 19) beschrieben werden.

Gegebenenfalls können auch hydroxyfunktionelle Monomere d) verwendet werden. Geeignete Methacrylat-Verbindungen sind solche, die eine Hydroxyfunktion tragen. Dazu zählen beispielsweise Hydroxyethylmethacrylat, Hydroxypropylmethacrylat oder Hydroxybutylmethacrylat. Geeignete Verbindungen d) sind auch Acrylat-Verbindungen, die eine Hydroxyfunktion tragen, dazu zählen beispielsweise Hydroxyethylacrylat, Hydroxypropylacrylat oder Hydroxybutylacrylat.

Der Anteil der Monomere a) im Copolymerisat A) beträgt 20 bis 80 Gew.%, bevorzugt 40 bis 60 Gew.-%, der Anteil der Monomere b) im Copolymerisat A) beträgt 19 bis 79 Gew.-%, bevorzugt 37 bis 57 Gew.-%, der Anteil der Monomere c) im Copolymerisat A) beträgt 1 bis 10 Gew.-%, bevorzugt 2 bis 8 Gew.-%, der Anteil der Monomere d) im Copolymerisat A) beträgt < 30 Gew.-% bevorzugt < 20 Gew.-%, wobei sich die Komponenten a), b), c) und gegebenefalls d) zu 100 Gew.-% addieren.

Der Anteil der Monomere a) im Copolymerisat B) beträgt 35 bis 90 Gew.-%, bevorzugt 60 bis 80 Gew.-%, der Anteil der Monomere b) im Copolymerisat B) beträgt 9,9 bis 60 Gew.-%, bevorzugt 19 bis 37 Gew.-%, der Anteil der Monomere c) im Copolymerisat B) beträgt 0,1 bis 3,7 Gew.-%, bevorzugt 1 bis 3,2 Gew.-%, der Anteil der Monomere d) im Copolymerisat A) beträgt < 30 Gew.-% bevorzugt < 20 Gew.-%, wobei sich die Komponenten a), b), c) und gegebenenfalls d) zu 100 Gew.-% addieren.

Das Gewichtsverhältnis der Monomeren des Copolymerisats A) zu den Monomeren des Copolymerisats B) beträgt 3:1 bis 1:5, bevorzugt 2;1 bis 1:3, besonders bevorzugt 3:2 bis 1:2.

Die Herstellung der erfindungsgemäßen Polymerdispersion kann auf an sich bekannte Weise, beispielsweise mittels mehrstufiger Emulsionspolymerisation erfolgen. Zweckmäßigerweise erfolgt sie durch ein Zulauf-Verfahren, bei welchem zunächst Wasser, Emulgator und gegebenenfalls eine geringe Menge Initiator vorlegt wird. Dabei enthält die Vorlage bevorzugt 40 bis 80 Gew.-Teile Wasser, bezogen auf die gesamte Wassermenge, 0,1 bis 1,5 Gew.-Teile Emulgator, bezogen auf den Feststoff, und gegebenenfalls 0,01 bis 0,3 Gew.% Initiator, bezogen auf den Feststoff, wobei sich die angegebenen Gewichtsteile zu 100,00 Gewichtsteilen addieren. Anschließend erfolgt die Dosierung einer geringen Menge der Monomere, bevorzugt 1 bis 10 Gew.%, gegebenenfalls erfolgt gleichzeitig die Dosierung des Initiators, bevorzugt 0,01 bis 0,3 Gew.% zur Bildung einer internen Saat auf die die weiteren Polymerisationsschritte erfolgen.

Zu dieser internen Saat werden dann schrittweise die Monomere für das Copolymerisat A) (Kern) in den genannten Verhältnissen zugegeben und bis zu einem Umsatz von mindestens 5,0 Gew.-%, bevorzugt mindestens 90,0 Gew.-%, besonders bevorzugt mindestens 95,0 Gew.-%, ganz besonders bevorzugt mindestens 99 Gew.-%, jeweils bezogen auf ihr Gesamtgewicht, polymerisiert, die Monomere für das Copolymerisat B) in den angegebenen Verhältnissen zugegeben und bis zu einem Umsatz von mindestens 85,0 Gew.-%, bevorzugt mindestens 90,0 Gew.-%, besonders bevorzugt mindestens 95,0 Gew.-%, ganz besonders bevorzugt 99 Gew.-%, jeweils bezogen auf ihr Gesamtgewicht, polymerisiert. Die Emulsionspolymerisation erfolgt in der Regel bei einer Temperatur von 30 bis 100 °C, bevorzugt von 50 bis 90 °C.

Gegenstand der vorliegenden Erfindung ist somit auch ein Verfahren zur Herstellung der erfindungsgemäßen Polymerdispersion, **dadurch gekennzeichnet, dass** zunächst Wasser, Emulgator und gegebenenfalls eine geringe Menge Initiator vorlegt wird, anschließend die Dosierung einer Menge der Monomere a) bis c), bevorzugt a) und b) von 1 bis 10 Gew.-%, gegebenenfalls gleichzeitig die Dosierung des Initiators zur Bildung einer internen Saat erfolgt und zu dieser internen Saat dann schrittweise die Monomere a) bis c) für das Copolymerisat A) (Kern) zugegeben und bis zu einem Umsatz von mindestens 5,0 Gew.-%, jeweils bezogen auf ihr Gesamtgewicht, polymerisiert werden, die Monomere a) bis c) für das Copolymerisat B) zugegeben und bis zu einem Umsatz von mindestens 85,0 Gew.-%, jeweils bezogen auf ihr Gesamtgewicht, polymerisiert werden.

Die Initiierung der Polymerisation erfolgt mit den für die freie radikalische Polymerisation gebräuchlichen Initiatoren. Diese umfassen z.B. Wasserstoffperoxid, Hydroperoxide, wie tert-Butylhydroperoxid, Dialkylperoxide, wie Di-tert-butylperoxid, Diacylperoxide, Peroxyester, Peroxycarbonate, Peroxydicarbonate oder Peroxyketale. Ebenfalls geeignet sind wasserlösliche anorganische Persulfate, wie z.B. Ammonium- oder Natriumpersulfat. Außerdem können auch Azoinitiatoren, wie z.B. Azodiisobutyronitril eingesetzt werden. Die Inititatoren können durch Zugabe von geeigneten Reduktionsmitteln als Redox-Initiatoren verwendet werden. Geeignete Reduktionsmittel sind z.B. Natriumdisulfit, Natriumformaldehyd oder Isoascorbinsäure. Üblicherweise erfolgt die Polymerisation in Gegenwart von 0,05 Gew.-% bis 2,0 Gew.-%, bevorzugt 0,2 bis 0,8 Gew.-% Initiator, bezogen auf den Feststoff. Bevorzugt werden die anorganischen Persulfate oder Hydroperoxide mit einer Konzentration von 0,2 bis 0,8 Gew.-%, bezogen auf den Feststoff, eingesetzt.

Die Stabilisierung der Dispersionen erfolgt unter anderem mittels ionischer und/oder nichtionischer Emulgatoren und/oder Schutzkolloiden. Als ionogene Emulgatoren kommen in erster Linie anionische Emulgatoren in Frage. Es kann sich dabei um die Alkali- oder Ammoniumsalze von Alkyl-, Aryl-, oder Alkylarylsulfonaten, -phosphaten, -phosponaten oder Verbindungen mit anderen anionischen Endgruppen handeln, wobei sich auch Oligo- oder Polyethylenoxid-Einheiten zwischen dem Kohlenwasserstoffrestcund der anionischen Gruppe befinden können. Typische Beispiele sind Natriumlaurylsulfat, Natriumlauryldiglykolsulfat, Natriumdecylglykolethersulfat, Natriumoctylphenolglykolethersulfat oder Natriumdodecylbenolsulfat.

Als nicht-ionische Emulgatoren werden üblicherweise Alkylpolyglykolether, wie Ethoxilierungsprodukte von Lauryl-, Oleyl- oder Stearylalkohol oder von Gemsichen wie Kokosfettalkohol. Ebenfalls geeignet sind Alkylphenolpolyglykolether, wie Ethoxilierungsprodukte von Octyl- oder Nonylphenol, Diisopropylphenolm, Triisopropylphenol, Di- oder Tri-tert-butylphenol. Neben den genannten Verbindungsklassen können auch Ethoxilierungsprodukte vom Propylenoxid eingesetzt werden.

Als geeignete Schutzkolloide verwendet man Naturstoffe wie Gummi arabicum, Stärke, Alginate oder modifizierte Naturstoffe wie Methyl-, Ehtyl-, Hydroxyalkyl- oder Carboxymethylcellulose oder synthetische Substanzen, wie Polyvinylalkohol oder modifzierte Polyvinylalkohole oder Polyvinylpyrrolidone.

Die Emulgatoren können durch eine entsprechende Funktionalisierung auch so modifiziert sein, dass sie mit den Monomeren radikalisch copolymerisieren (Surfmer).

Es ist weiterhin möglich auch Gemische der genannten Emulgatoren zu verwenden.

Bevorzugt wird als Emulgator ein Alkylphosphatester, wie z.B. Phosphatester von nichtionischen und Polyoxyethylenaddukten (erhältlich unter der Bezeichnung Dextrol OC® von der Firma Hercules, USA) eingesetzt. Die Gesamtmenge an Emulgator beträgt bezogen auf den Feststoff 0,3 bis 1,5 Gew.%, bevorzugt 0,3 bis 1,0 Gew.-%.

Die Emulsionspolymerisation erfolgt in der Regel bei 30 bis 100 °C, bevorzugt 50 bis 90 °C. Das Polymerisationsmedium kann sowohl nur aus Wasser, als auch aus Mischungen aus Wasser und damit mischbaren Flüssigkeiten wie Methanol bestehen. Bevorzugt wird nur Wasser verwendet. Die Emulsionspolymerisation kann sowohl als Batchprozess als auch in Form eines Zulaufverfahrens, einschließlich Stufen- oder Gradientenfahrweise, durchgeführt werden, bevorzugt ist das Zulaufverfahren. Bei dem Zulaufverfahren erfolgt die Polymerisation bei einem vergleichsweise geringen Monomerpolster, wobei ein oder mehrere Monomere in reiner oder emulgierter Form und die zumeist wasserlöslichen Hilfsmittel über mehrere räumlich getrennte Zuläufe kontinuierlich, stufenweise oder in Form eines Gradienten zudosiert werden. Die Einstellung der Teilchengröße erfolgt über die in situ Bildung einer internen Saat, wobei die Partikelgröße der Saat über das Verhältnis von Emulgator zu Monomer determiniert wird. Es ist ebenfalls möglich die Teilchengröße durch die Vorlage einer externen Saat mit definierter Teilchengröße zu steuern. Zur Herstellung der erfindungsgemäßen Kern-Schale Partikel erfolgt eine stufenweise Dosierung mindestens zweier unterschiedlicher Monomermischungen. Die Monomeren des Monomerengemisches der 1. oder 2. Stufe werden bevorzugt zu mindestens 90 Gew.-%, besonders bevorzugt zu mindestens, 95 Gew.-% und ganz besonders zu mindestens 99 Gew.-% auspolymerisiert, bevor mit der Zugabe der Monomeren der nächsten Stufe begonnen wird.

Die Art und Weise, in der der Initiator im Verlauf der radikalischen wässrigen Emulsionspolymerisation dem Polymerisationsgefäß zugegeben wird, ist dem Fachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im einzelnen hängt dies von der chemischen Natur des Initiatorsystems als auch von der Polymerisationstemperatur ab. Bevorzugt wird ein Teil vorgelegt und der Rest nach Maßgabe des Verbrauchs der Polymerisationszone zugeführt.

Eine monomodale, enge Teilchengrößenverteilung, d.h. ein geringer Polydispersitätsindex, ist durch dem Fachmann bekannte Maßnahmen erhältlich, z. B. durch Variation der Menge, des Dosierprofils und Struktur der grenzflächenaktiven Verbindung (Emulgator und/oder Schutzkolloide) und/oder entsprechende Rührergeschwindigkeiten.

Um einen vollständigen Umsatz zu gewährleisten und die Dispersion von Spuren von freiem Monomer zu befreien, erfolgt bevorzugt eine Nachaktivierung, wobei geringe Mengen Initiators, bevorzugt 0,01 bis 0,2 Gew.%, zugegeben werden. Es ist außerdem möglich die Dispersion durch physikalische Methoden, wie z.B. durch anschließende Wasserdampfdestillation aufzureinigen.

Der Feststoffgehalt einer Dispersion wird generell über das Verhältnis von Wasser zu organischen Ausgangsstoffen bestimmt. Der Feststoffgehalt der erfindungsgemäßen Polymer-Dispersionen liegt zwischen 25 und 65 Gew.%, bevorzugt zwischen 30 und 55 Gew.%, ganz besonders bevorzugt zwischen 35 und 55 Gew.%.

Die Viskosität der erfindungsgemäßen Polymerdispersionen liegt zwischen 5 und 300 mPas, bevorzugt zwischen 10 und 150 mPas besonders bevorzugt zwischen 15 und 100 mPas.

Der pH-Wert der Dispersionen ist durch Zugabe definierter Mengen einer Base variierbar und kann zwischen pH 3 bis 12 liegen, bevorzugt ist ein pH-Wert von 6 bis 9. Zumeist erfolgt die Polymerisation im saurem pH-Bereich und die Neutralisation erfolgt nach beendeter Polymerisation. Es ist aber auch möglich einen Teil der Base schon im Verlauf der Polymerisation zuzuführen, um gegebenenfalls einer Agglomeration vorzubeugen. Als Basen können die dem Fachmann bekannten anorganischen oder organischen Basen verwendet werden, dazu zählen z.B. wässrige Lösungen von Alkalihydroxiden, Ammoniumhydroxid, organische Amine wie Triethylamin oder Ethyldiisopropylamin. Bevorzugt werden Alkalihydroxide und Ammoniumhydroxid.

Damit die erfindungsgemäßen Polymer-Dispersionen als Beschichtungsmittel mit guter und gleichmäßiger Filmoptik eingesetzt werden können, ist ein möglichst geringer Gehalt an Mikrokoagulat erforderlich. Dabei kann die Entstehung des Mikrokoagulats durch die dem Fachmann bekannten Maßnahmen, wie Rührergeometrie, Rührgeschwindigkeit, Zulaufzeit, Feststoffgehalt, Menge Dosierschema und Typ verwendeter grenzflächenaktiver Verbindungen und Menge an Verbindungen zur elektrostatischen und/oder sterischen Stabilisierung unterdrückt werden. Es ist auch möglich entstandenes Mikrokoagulat durch Filtration abzutrennen.

Die erfindungsgemäßen Polymer-Dispersionen können mit weiteren üblichen Hilfs- und Zusatzstoffen versetzt werden, dazu zählen beispielsweise Biozide, Entschäumer, Antioxidantien, UV-Stabilisatoren, Filmbildungshilfsmittel, Verdicker oder Colösemittel.

Die erfindungsgemäßen Polymer-Dispersionen können als filmbildender Bestandteil von Lacken verwendet werden und eignen sich zur Beschichtung von Holz, Metall, Kunststoff, Papier, Leder, Textilien, Glas und mineralischen Untergründen, bevorzugt ist die Verwendung in Holzbeschichtungen. Die erfindungsgemäßen Dispersionen können in Form von Klarlacken oder pigmentierten Lacken eingesetzt werden. Es ist ebenfalls möglich die erfindungsgemäßen Polymer-Dispersionen mit weiteren wässrigen Dispersionen zu kombinieren, dazu zählen beispielsweise weitere Polyacrylat-, Polystyrolacrylat-, Polyurethan-, Polyvinylacetat-, Styrol-Butadien-, Acrylnitril-Butadien-, Alklyen- oder Ethylen-Vinylacetat-Dispersionen.

Gegenstand der vorliegenden Erfindung sind wässrige Beschichtungsmittel, enthaltend die erfindungsgemäßen wässrigen Polymer-Dispersionen.

Es ist jedoch auch möglich, dass die erfindungsgemäßen Polymer-Dispersionen mit Vernetzern C) kombiniert werden.

Durch Kombination mit Vernetzern C) können dabei, je nach Reaktivität oder gegebenenfalls Blockierung der Vernetzer, sowohl Einkomponentenlacke als auch Zweikomponentenlacke hergestellt werden. Unter Einkomponentenlacken im Sinne der vorliegenden Erfindung sind dabei Überzugsmittel zu verstehen, bei denen Bindemittelkomponente und Vernetzerkomponente zusammen gelagert werden können, ohne dass eine Vernetzungsreaktion in merklichen bzw. für die spätere Applikation schädlichem Ausmaß stattfindet. Die Vernetzungsreaktion findet erst bei Applikation nach einer Aktivierung des Vernetzers statt. Diese Aktivierung kann z.B. durch Temperatursteigerung bewirkt werden. Unter Zweikomponentenlacken im Sinne der vorliegenden Erfindung versteht man Überzugsmittel, bei denen Bindemittelkomponente und Vernetzerkomponente aufgrund ihrer hohen Reaktivität in getrennten Gefäßen gelagert werden müssen. Die beiden Komponenten werden erst kurz vor Applikation gemischt und reagieren dann im Allgemeinen ohne zusätzliche Aktivierung. Zur Beschleunigung der Vernetzungsreaktion können aber auch Katalysatoren eingesetzt oder höhere Temperaturen angewendet werden.

Geeignete Vernetzer C) sind beispielsweise Polyisocyanat-Vernetzer, Amid- und Amin-Formaldehydharze, Phenolharze, Aldehyd- und Ketonharze.

Bevorzugte Vernetzer C) sind freie oder blockierte Polyisocyanate, welche gegebenenfalls hydrophil modifiziert sein können und/oder zu mindestens teilweise hydrophil-modifizierte, unblockierte Polyisocyanate.

Bevorzugt ist das Polyisocyanat mindestens anteilig hydrophil-modifiziert.

Geeignete Polyisocyanate sind difunktionellen Isocyanaten wie z.B. Isophorondiisocyanat, Hexamethylendiisocyanat, 2,4- bzw. 2,6-Diisocyanatotoluol, 4.4'-Diphenylmethandiisocyanat und/oder deren höhermolekularen Trimere, Biurete, Urethane, Iminooxadiazindion und/oder Allophanate. Besonders bevorzugt ist der Einsatz niedrigviskoser, gegebenenfalls hydrophilierter, Polyisocyanate der vorstehend genannten Art auf Basis aliphatischer oder cycloaliphatischer Isocyanate.

Zur Blockierung werden die zuvor genannten Polyisocyanate mit Blockierungsmittel wie z.B. Methanol, Ethanol, Butanol, Hexanol, Benzylakohol, Acetoxim, Butanonoxim, Caprolactam, Phenol, Diethylmalonat, Dieethylmalonat, Dimethylpyrazol, Triazol, Dimethyltriazol, Acetessigester, Diisopropylamin, Dibutylamin, tert.-Butylbenzylamin, Cyclopentanoncarboxyethylester, Dicyclohexylamin und/oder tert.-Butylisopropylamin umgesetzt.

Die unblockierten und blockierten Polyisocyanate können auch durch Einbau hydrophiler Gruppen, wie z.B. Carboxylat-, Sulphonat- und/oder Polyethylenoxidstrukturen in eine wasserdispergierbare Form überführt werden und so in Kombination mit den erfindungsgemäßen Zubereitungen eingesetzt werden. Die genannten blockierten Polyisocyanate können auch unter Mitverwendung hydroxy- bzw. aminofunktioneller, auch höhermolekularere Komponenten, wie z.B. Diole, Triole, Aminoalkohole, Polyester, Polyether, Polycarbonate und Mischungen der genannten und/oder anderer Rohstoffe hergestellt werden.

Die als Vernetzer C) eingesetzten Polyisocyanate weisen bei 23°C im Allgemeinen eine Viskosität von 10 bis 5 000 mPas auf und können auch falls zur Viskositätseinstellung gewünscht in Abmischung mit geringen Mengen an inerten Lösemitteln zum Einsatz gelangen.

Prinzipiell ist natürlich auch der Einsatz von Mischungen verschiedener Vernetzer C) möglich.

Die Verwendung der erfindungsgemäßen wässrigen Polymer-Dispersionen zur Herstellung von Beschichtungen ist ebenfalls Gegenstand der vorliegenden Erfindung. Die Beschichtung erfolgt dabei bevorzugt auf Holz oder Holzwerkstoffe als Substrat.

**Beispiele:**

***Chemikalien***:

Acrylsäure (ACS), CAS 79-10-7, Aldrich, DE
Methylmethacrylat (MMA), CAS 80-62-6, Aldrich, DE
Styrol (S), CAS 100-42-5, Aldrich, DE
n-Butylacrylat (BA), CAS 141-32-2, Aldrich, DDE
Ammoniumpersulfat (APS), CAS 7727-54-0, Aldrich, DE
Emulgator Tannemul® 951 (E951), CAS 68610-22-0, Tanatex, DE
Emulgator Dextrol OC® 40 (PHT), Gemisch aus CAS 009046-01-9 (> 25%), CAS 024938-91-8 (< 10%), CAS 007664-38-2 (< 10%), Hercules, USA
BYK® 341, Oberflächenadditiv, BYK Chemie, DE
BYK® 348, Benetzungsmittel, BYK Chemie, DE
BYK® 028, Entschäumer, BYK Chemie, DE
Dehydran® 1620, Entschäumer, Cognis, De
Acrylsol® RM-8 W, Verdicker, Rohm & Haas, USA

***Methoden:***

Glastemperatur berechnet:

Die Glastemperatur wird nach der Fox-Gleichung (Bulletin of the American Physical Society 1, 3, Seite 123, 1956) berechnet:

$$\frac{1}{T_g} = \frac{w_1}{T_{g(1)}} + \frac{w_2}{T_{g(2)}} + \ldots \frac{w_i}{T_{g(i)}} + \ldots \frac{w_n}{T_{g(n)}}$$

Wobei $T_{g(i)}$ die Glastemperatur des jeweiligen Homopolymeren i von n Monomeren und $w_i$ den Massenanteil des Monomeren i bedeutet, wobei die Summe aller Massenanteile $w_1 + w_2 + ...w_i +... w_n = 1$ ist.

Teilchengröße:

Die Bestimmung der mittleren Teilchengröße (MTG) erfolgte mittels Laser-Korrelations-Spektroskopie (Gerät: Malvern Zetasizer 1000, Malvern Instruments LTD), es sind die Z-Mittel angegeben.

Festkörper:

Die Bestimmung des Festkörpers erfolgte nach DIN-EN ISO 3251.

Viskosität:

Die Viskosität wird mit handelsüblichen Brookfield Viskosimetern bei RT nach Vorgabe des Gerätestellers bestimmt.

Pendelhärte:

Die Messung der Pendelhärte nach König erfolgte nach DIN 53157.

Filmoptik:

Es wurde eine optische Bewertung des Lackfilms vorgenommen, wobei hohe Zahlen eine schlechte Optik repräsentieren.

Filmtrübung:

Die Messung der Trübung erfolgte nach DIN EN ISO 13803 mit einem Haze-Gloss-meter der Firma BYK Gardner.

Ethanol-Beständigkeit:

Die Beschichtungen werden mit einem mit Ethanol getränktem Baumwollbausch in Kontakt gebracht und mit einer Petrischale abgedeckt. Die Einwirkung erfolgt für 30 min., danach wird die Beschichtung drei Tage stehen gelassen und anschließend erfolgt eine optische Bewertung, wobei hohe Zahlen eine schlechte Beständigkeit signalisieren.

Sonstige Beständigkeiten (Rotwein, Senf und Kaffee):

Es wird wie unter dem Punkt Ethanol-Beständigkeit verfahren, die Einwirkdauer beträgt aber 16 h.

***Herstellung der Dispersionen:***

Im Folgenden Abschnitt wird eine allgemeine Synthesevorschrift zur Herstellung der erfindungsgemäßen Dispersionen beschrieben, die spezifischen Zusammensetzungen der einzelnen Versuche lassen sich aus Tab. 1 entnehmen.

**Allgemeine Synthesevorschrift:**

In einem 3 L Glasreaktor mit geregelter Heizung und Kühlung und Rührmotor werden unter Stickstoffatmosphäre 52 Teile Wasser mit der entsprechenden Emulgatormenge EI vorgelegt. Die Lösung wird anschließend auf 80 °C aufgeheizt. Nach Erreichen der Polymerisationstemperatur werden die Monomermischung M1 und die Initiatorlösung W1 für die Herstellung der internen Saat innerhalb von 30 min. über eine Dosierpumpe zugegeben, danach wird noch 30 min. nachgerührt. Danach werden die Monomermischung M2 des Kerns und die wässrige Lösung W2 innerhalb von 120 min. bei 80 °C zudosiert. Anschließend erfolgt die Zugabe der Monomermischung M3 der Schale sowie der wässrigen Lösung W3 in einem Zeitraum von 120 min. Direkt nach Beendigung der Dosierungen M3 und W3 werden 0,05 Teile APS in 5 Teilen Wasser zur Nachaktivierung innerhalb von 60 min. zudosiert, die Dispersion wird noch über einen Zeitraum von 60 min. weiter gerührt und anschließend abgekühlt. Zur pH-Einstellung auf pH 7 wird die entsprechende Menge ammoniakalischer Lösung langsam zugetropft und die fertige Dispersion wird über ein 125 μm Filter abgeführt.

Tabelle 1:  Rezepturen zur Herstellung der Polyacrylat-Dispersionen

*Vergleichsbeispiel

| Versuch | | 1* | 2* | 3* | 4* | 5* | 6 |
|---|---|---|---|---|---|---|---|
| Emulgator-typ | | E951 | E951 | E951 | E951 | E951 | PHT |
| Vorlage | E1 | 4,7 | 4,7 | 4,7 | 4,7 | 4,7 | 4,5 |
| M1 | MMA / g | 14,1 | 27,6 | 21,6 | 14,0 | 11,3 | 14,1 |
| | BA / g | 2,5 | 3,0 | 3,0 | 31,6 | 2,5 | 2,5 |
| | S / g | 14,0 | 31,0 | 21,0 | 16,0 | 14,0 | 14,0 |
| W1 | APS / g | 0,5 | 0,5 | 0,5 | 0,5 | 0,5 | 0,5 |
| | Wasser | 18,0 | 18,0 | 18,0 | 18,0 | 18,0 | 22,0 |
| M2 | MMA / g | 123,0 | 247,0 | 192,0 | 135,0 | 107,0 | 123,0 |
| | BA / g | 14,0 | 30,0 | 22,0 | 270,0 | 14,0 | 14,0 |
| | S / g | 130,0 | 275,0 | 196,0 | 147,0 | 130,0 | 130,0 |
| | ACS / g | 9,4 | 9,4 | 9,4 | 9,4 | 28,2 | 9,4 |
| W2 | APS / g | 2,2 | 2,2 | 2,2 | 2,2 | 2,2 | 2,2 |
| | E2 / g | 2,4 | 2,4 | 2,4 | 2,4 | 2,4 | 2,5 |
| | Wasser / g | 300,0 | 300,0 | 300,0 | 300,0 | 300,0 | 300,0 |
| M3 | MMA / g | 149,0 | 67,0 | 108,6 | 137,1 | 181,8 | 200,6 |
| | BA / g | 301,6 | 148,6 | 225,0 | 16,5 | 230,0 | 230,0 |
| | S / g | 163,0 | 82,0 | 122,0 | 144,0 | 183,0 | 183,0 |
| | ACS / g | 9,4 | 9,4 | 9,4 | 9,4 | 28,2 | 9,4 |
| W3 | APS / g | 2,2 | 2,2 | 2,2 | 2,2 | 2,2 | 2,2 |
| | E3 / g | 2,4 | 2,4 | 2,4 | 2,4 | 2,4 | 2,5 |
| | Wasser / g | 300,0 | 300,0 | 300,0 | 300,0 | 300,0 | 300,0 |

Fortsetzung Tabelle 1:

| Versuch | | 7 | 8 | 9 | 10* |
|---------|-----|-----|-----|-----|-----|
| **Emulgatortyp** | | PHT | PHT | PHT | PHT |
| **Vorlage** | E1 | 2,4 | 2,4 | 2,4 | 2,4 |
| **M1** | MMA / g | 14,1 | 14,1 | 14,1 | 14,1 |
| | BA / g | 2,5 | 2,5 | 2,5 | 2,5 |
| | S / g | 14,0 | 14,0 | 14,0 | 14,0 |
| **W1** | APS / g | 0,5 | 0,5 | 0,5 | 0,5 |
| | Wasser | 22,0 | 22,0 | 22,0 | 22,0 |
| **M2** | MMA / g | 123,0 | 123,0 | 123,0 | 123,0 |
| | BA / g | 14,0 | 14,0 | 14,0 | 14,0 |
| | S / g | 130,0 | 125,3 | 120,6 | 115,9 |
| | ACS / g | 9,4 | 14,1 | 18,8 | 23,5 |
| **W2** | APS / g | 2,2 | 2,2 | 2,2 | 2,2 |
| | E2 / g | 1,2 | 1,2 | 1,2 | 1,2 |
| | Wasser / g | 300,0 | 300,0 | 300,0 | 300,0 |
| **M3** | MMA / g | 200,6 | 200,6 | 200,6 | 200,6 |
| | BA / g | 230,0 | 230,0 | 230,0 | 230,0 |
| | S / g | 183,0 | 178,3 | 173,6 | 168,9 |
| | ACS / g | 9,4 | 14,1 | 18,8 | 23,5 |
| **W3** | APS / g | 2,2 | 2,2 | 2,2 | 2,2 |
| | E3 / g | 1,2 | 1,2 | 1,2 | 1,2 |
| | Wasser / g | 300,0 | 300,0 | 300,0 | 300,0 |

Tabelle 2:      Eigenschaften der Dispersionen

| Versuch | 1* | 2* | 3* | 4* | 5* | 6 |
|---------|-----|-----|-----|-----|-----|-----|
| **FSG / %** | 39,8 | 39,8 | 39,7 | 40,0 | 39,8 | 39,9 |
| **pH** | 6,3 | 6,2 | 6,1 | 6,0 | 6,7 | 7,4 |
| **MTG / nm** | 99 | 110 | 106 | 97 | 97 | 101 |
| **Visko / mPas** | 20 | 20 | 20 | 20 | 50 | 25 |

Fortsetzung Tabelle 2:

| Versuch | 7 | 8 | 9 | 10* |
|---|---|---|---|---|
| FSG / % | 39,7 | 39,9 | 39,9 | 38,2 |
| pH | 7,1 | 6,8 | 6,8 | 6,9 |
| MTG / nm | 117 | 110 | 121 | 93 |
| Visko /mPas | 15 | 15 | 15 | 15 |

## *Formulierung der Dispersionen:*

Im folgenden Abschnitt wird eine allgemeine Vorschrift zur Formulierung der Beispielsdispersionen gezeigt, die Einwaagen können Tab. 3 entnommen werden.

Die Dispersion wird in einem Gefäß vorgelegt und gerührt. Anschließend erfolgt die Zugabe von BYK 341 und BYK 348 bei einer Rührgeschwindgkeit von 2 m/s und es wird 10 min. gerührt. Daraufhin erfolgt die Zugabe des Entschäumers Dehydran 1620 bei einer Rührgeschwindigkeit von 2 m/s und es wird für 5 min. gerührt und dann wird BYK 028 bei 2 m/s Rührgeschwindigkeit zugegeben und es wird für weitere 5 min. gerührt. Hierauf erfolgt die Zugabe des Colösers Butlydiglykol in einer 1:1 Mischung mit Wasser bei einer Rührgeschwindigkeit von 1 - 1,5 m/s, es wird 5 min. gerührt und zuletzt wird der Verdicker bei einer Rührgeschwindigkeit von 0,5 - 1 m/s zugegeben, wobei die Formulierung wieder 5 min. gerüht wird. Die Menge des Verdickers wird dabei so eingestellt, dass die Auslaufzeit ca. 25 sek. beträgt (DIN-4 Becher).

Tabelle 3: Zusammensetzung der verwendeten Formulierungen

| | |
|---|---|
| Dispersion aus Beispielen / % | 82,9 |
| BYK 341 / % | 0,4 |
| BYK 348 / % | 0,5 |
| Dehydran 1620 / % | 0,2 |
| BYK 028 / % | 0,8 |
| Butyldiglykol / Wasser (1:1) / % | 14,3 |
| Acrysol RM-8 W / % | ca. 0,9 |

## *Applikation der Formulierungen und Ergebnisse:*

Die Formulierungen werden mit einer Handrakel mit einer Nassschichtdicke von 200 $\mu$m auf eine MDF-Platte aufgetragen und anschließend wird für 24 h bei Raumtemperatur getrocknet. Die Ergebnisse der Prüfungen sind in Tab. 4 zu finden:

Tabelle 4: Ergebnisse der anwendungstechnischen Prüfungen

| Versuch | 1* | 2* | 3* | 4* | 5* | 6 |
|---|---|---|---|---|---|---|
| $T_g$ total ber. / °C | 35 | 60 | 50 | 35 | 48 | 48 |
| $T_g$ Kern ber. / °C | 90 | 90 | 90 | 13 | 90 | 90 |
| $T_g$ Schale ber. / °C | 13 | 13 | 13 | 90 | 30 | 30 |
| Kern / wt-% | 33 | 67 | 50 | 67 | 33 | 33 |
| Schale / wt-% | 67 | 33 | 50 | 33 | 67 | 67 |
| Pendelhärte / sek. | 36 | 55 | 46 | 52 | 64 | 51 |
| Filmoptik | 1 | 4 | 3 | 1 | 1 | 1 |
| Filmtrübung | 1 | 4 | 3 | 1 | 1 | 1 |
| EtOH-Beständigkeit | 4 | 2 | 3 | 4 | 4 | 2 |
| Kaffee-Beständigkeit | 1 | 1 | 1 | 1 | 1 | 1 |
| Wein-Beständigkeit | 1 | 1 | 1 | 1 | 1 | 1 |
| Senf-Beständigkeit | 4 | 3 | 3 | 4 | 4 | 2 |

Fortsetzung <u>Tabelle 4:</u>

| Versuch | 7 | 8 | 9 | 10* |
|---|---|---|---|---|
| $T_g$ total ber. / °C | 48 | 48 | 48 | 48 |
| $T_g$ Kern ber. / °C | 90 | 90 | 90 | 90 |
| $T_g$ Schale ber. / °C | 30 | 30 | 30 | 30 |
| Kern / wt-% | 33 | 33 | 33 | 33 |
| Schale / wt-% | 67 | 67 | 67 | 67 |
| Pendelhärte / sek. | 54 | 53 | 57 | 61 |
| Filmoptik | 2 | 2 | 1 | 1 |
| Filmtrübung | 1 | 1 | 1 | 1 |
| EtOH-Beständigkeit | 1 | 1 | 2 | 3 |
| Kaffee-Beständigkeit | 1 | 1 | 1 | 1 |
| Wein-Beständigkeit | 1 | 1 | 1 | 1 |
| Senf-Beständigkeit | 1 | 1 | 2 | 3 |

In Tabelle 4 sind die physikalischen Parameter und Prüfergebnisse der entsprechenden Holzlacke der Beispieldispersionen 1 - 11 dargestellt. Bei den Prüfergebnissen ohne Einheit bedeuten die niedrigen Zahlen ein positives Ergebnis, hohe Zahlen ein negatives Ergebnis.

Es ist erkennbar, dass nur die erfindungsgemäßen Dispersionen gleichzeitig eine ausreichende Pendelhärte von > 50 sek. bei gleichzeitig guter Filmoptik und niedriger Trübung in Kombination mit einer hohen Lösemittelfestigkeit aufweisen.

## Patentansprüche

**1.** Wässrige Polymerdispersionen enthaltend mindestens ein Kern-Copolymerisat A) und mindestens ein Schale-Copolymerisat B), **dadurch gekennzeichnet, dass** die Glasübergangstemperatur ($T_g$) des Kerns zwischen 70 °C und 100 °C, die Glasübergangstemperatur ($T_g$) der Schale zwischen 20 °C und 55 °C und die Gesamt-Glastemperatur ($T_g$) des Kern-Schale Copolymerisats zwischen 30°C und 80°C liegt und die Dispersion einen Emulgatorgehalt in einer Menge von ≤ 1,5 Gew.-%, bezogen auf den Feststoff, enthält.

**2.** Wässrige Polymerdispersionen gemäß Anspruch 1, **dadurch gekennzeichnet, dass** die Polymer-Partikel eine mittlere Teilchengröße von 75 bis 140 nm aufweisen.

**3.** Wässrige Polymerdispersionen gemäß Anspruch 1, **dadurch gekennzeichnet, dass** die $T_g$ des Copolymerisats B) mindestens 30 °C tiefer als die $T_g$ des Copolymerisats A) ist.

**4.** Wässrige Polymerdispersionen gemäß Anspruch 1, **dadurch gekennzeichnet, dass** das Monomergemisch des Copolymerisats A) und B)

a) $C_1$-$C_{20}$-Alkyl(meth)acrylate,
b) Vinylaromaten mit bis zu 20 C-Atomen,

c) Säurefunktionelle Monomere sowie

d) gegebenenfalls hydroxyfunktionelle Monomere enthält.

**5.** Wässrige Polymerdispersionen gemäß Anspruch 1, **dadurch gekennzeichnet, dass** der Anteil der Monomere a) im Copolymerisat A) 20 bis 80 Gew.%, der Anteil der Monomere b) 19 bis 79 Gew.-%, der Anteil der Monomere c) 1 bis 10 Gew.-%, der Anteil der Monomere d) < 30 Gew.-% beträgt, wobei sich die Komponenten a), b), c) und gegebenenfalls d) zu 100 Gew.-% addieren.

**6.** Wässrige Polymerdispersionen gemäß Anspruch 1, **dadurch gekennzeichnet, dass** der Anteil der Monomere a) im Copolymerisat B) 35 bis 90 Gew.-%, der Anteil der Monomere b) 9,9 bis 60 Gew.-%, der Anteil der Monomere c) 0,1 bis 3,7 Gew.-%, der Anteil der Monomere d) < 30 Gew.-% beträgt, wobei sich die Komponenten a), b), c) und gegebenenfalls d) zu 100 Gew.-% addieren.

**7.** Wässrige Polymerdispersionen gemäß Anspruch 1, **dadurch gekennzeichnet, dass** das Gewichtsverhältnis der Monomeren des Copolymerisats A) zu den Monomeren des Copolymerisats B) 3:1 bis 1:5 beträgt.

**8.** Wässrige Polymerdispersionen gemäß Anspruch 1, **dadurch gekennzeichnet, dass** der Emulgator ein Alkylphosphatester ist.

**9.** Verfahren zur Herstellung der erfindungsgemäßen Polymerdispersion, **dadurch gekennzeichnet, dass** zunächst Wasser, Emulgator und gegebenenfalls eine geringe Menge Initiator vorlegt wird, anschließend die Dosierung einer Menge der Monomere a) bis c) von 1 - 10 Gew.-%, gegebenenfalls gleichzeitig die Dosierung des Initiators zur Bildung einer internen Saat erfolgt und zu dieser internen Saat dann schrittweise die Monomere a) bis d) für das Copolymerisat A) (Kern) zugegeben und bis zu einem Umsatz von mindestens 5,0 Gew.-%,jeweils bezogen auf ihr Gesamtgewicht, polymerisiert werden, die Monomere a) bis d) für das Copolymerisat B) zugegeben und bis zu einem Umsatz von mindestens 85,0 Gew.-%, jeweils bezogen auf ihr Gesamtgewicht, polymerisiert werden.

**10.** Wässrige Beschichtungsmittel, enthaltend wässrige Polymer-Dispersionen gemäß Anspruch 1.

**12.** Verwendung der wässrigen Polymer-Dispersionen gemäß Anspruch 1 zur Herstellung von Beschichtungen auf Substraten.

**13.** Verwendung gemäß Anspruch 12, **dadurch gekennzeichnet, dass** die Substrate Holz oder Holzwerkstoffe sind.

Europäisches
Patentamt

European
Patent Office

Office européen
des brevets

# EUROPÄISCHER RECHERCHENBERICHT

Nummer der Anmeldung

EP 09 00 0845

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2004/241484 A1 (UCHIDA MASAYA [JP] ET AL) 2. Dezember 2004 (2004-12-02) * Absätze [0059] - [0061], [0072], [0073], [0125]; Ansprüche 4,6; Beispiele 1-6 * ----- | 1-13 | INV. C08F265/06 C09D15/00 C09D151/00 |
| X | EP 1 869 100 B (DSM IP ASSETS BV [NL]) 10. September 2008 (2008-09-10) comparative example 13 * Seite 8, Zeilen 36,37, Absatz 17; Tabelle 2 * ----- | 1,10,12 | |
| X | WO 98/08882 A (JOHNSON S C COMM MARKETS INC [US]) 5. März 1998 (1998-03-05) * Seite 11, Zeilen 18-21; Ansprüche 1,3,5,14 * ----- | 1,10,12 | |
| | | | RECHERCHIERTE SACHGEBIETE (IPC) C09D C08F |

Der vorliegende Recherchenbericht wurde für alle Patentansprüche erstellt

| Recherchenort | Abschlußdatum der Recherche | Prüfer |
|---|---|---|
| München | 25. Juni 2009 | Clement, Silvia |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 00 0845

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-06-2009

| Im Recherchenbericht angeführtes Patentdokument | Datum der Veröffentlichung | Mitglied(er) der Patentfamilie | Datum der Veröffentlichung |
|---|---|---|---|
| US 2004241484 A1 | 02-12-2004 | CN 1572848 A<br>KR 20040103368 A<br>TW 287031 B | 02-02-2005<br>08-12-2004<br>21-09-2007 |
| EP 1869100 B | 10-09-2008 | AT 407962 T<br>DK 1869100 T3<br>EP 1869100 A1<br>WO 2006108570 A1<br>ES 2314896 T3<br>US 2009068367 A1 | 15-09-2008<br>19-01-2009<br>26-12-2007<br>19-10-2006<br>16-03-2009<br>12-03-2009 |
| WO 9808882 A | 05-03-1998 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 0376096 A
- WO 0172897 A
- DE 19727504 A
- EP 1520865 A
- US 3793402 A
- DE 4121652 A
- DE 4136993 A
- EP 828772 A
- WO 0039181 A


**In der Beschreibung aufgeführte Nicht-Patentliteratur**

- Bulletin of the American Physical Society 1. 1956, vol. 3, 123